# EUROPEAN PATENT APPLICATION

(11) **EP 2 309 102 A1**
(43) Date of publication of application: **13.04.2011**
(21) Application number: 09762315.1
(22) Date of filing: 25.03.2009
(51) Int. Cl.: F01N 3/02, F01N 3/22, F01N 3/24, F01N 3/34, F02B 37/04, F02B 37/16, F02B 37/18, F02B 37/24, F02B 39/10, B01D 46/42

(54) **METHOD AND SYSTEM FOR REGENERATING DUST COLLECTING FILTER**

(30) Priority: 11.06.2008 JP 2008152872
(71) Applicant: IHI Corporation, Tokyo 135-8710 (JP)
(72) Inventor: SHIMIZU, Masahiro, Tokyo 135-8710 (JP); SHINAGAWA, Kazuhiko, Tokyo 135-8710 (JP)
(74) Representative: Epping - Hermann - Fischer
(86) International application number: PCT/JP2009/055987
(87) International publication number: WO 2009/150884

(57) **Abstract**

A particulate filter regeneration system according to the present invention, which regenerates a particulate filter (4) provided in an exhaust line (3) of an engine (2) equipped with a turbocharger (1) by burning matter trapped on the particulate filter (4) by raising the temperature of exhaust gas at times that the particulate filter (4) requires regeneration, comprises an electric motor (5) functioning as an intake quantity regeneration means capable of increasing the flow rate of compressed air without depending on the flow rate of exhaust gas flowing across a turbine (1t) of the turbocharger (1), a bypass line (7) connecting an engine intake line (6e) upstream of the engine (2) to a section of the exhaust line (3) upstream of the particulate filter (4), a flow rate regulation valve (8) regulating the flow rate in the bypass line (7), and a control means (9) controlling the electric motor (5) and the flow rate regulation means (8).

## Description

### TECHNICAL FIELD

This invention relates to a method and system for regenerating a particulate filter provided to remove particulate matter from exhaust gas, specifically a method and system for regenerating a particulate filter by burning matter trapped on the particulate filter.

### BACKGROUND ART

Most of automobiles using an internal combustion engine, such as a diesel engine or the like, are equipped with a particulate filter designed to clean up exhaust gas by trapping PM (particulate matter) in the exhaust gas. Particulate filters used in diesel engine automobiles are called DPFs, in particular. Since PM accumulated to a certain level clogs such DPFs, the DPFs are regenerated by burning PM by raising the temperature of exhaust gas (see Patent Document 1, for example).

As mentioned above, in order to regenerate particulate filters such as DPFs, raising the exhaust gas temperature, namely increasing heat contained in the exhaust gas by supplying fuel to the engine is required. However, for efficient operation of the engine, the amount of fuel supplied to the engine is controlled to meet a predetermined air-fuel ratio, so that increasing heat contained in the exhaust gas at optional times is difficult. Thus, generally, DPFs are regenerated during high-load operation of automobiles.

In the method of regenerating the particulate filter disclosed in Patent Document 1, the exhaust gas temperature is raised by determining fuel injection quantity on the basis of a target for exhaust temperature and regulating actual expansion ratio by an expansion ratio varying means. This allows the particulate filter regeneration not only in the automobile's high-load operation but over a wide range of operating conditions.

### PRIOR ART DOCUMENT

Patent Document 1: Japanese Patent Application KOKAI Publication 2008-106687

### DISCLOSURE OF THE INVENTION

### Problem to be solved by the Invention

The particulate filter regeneration method disclosed in Patent Document 1, however, requires an expansion ratio varying means for regulating the actual expansion ratio of the engine, resulting in complicated configuration and difficulty of control. Further, if a turbocharger is arranged upstream of the particulate filter, the exhaust gas loses heat by doing work in the turbocharger, resulting in low efficiency. Further, burning of matter trapped on the DPF requires oxygen, but if fuel supply is increased without increasing intake air supplied to the engine, oxygen in the intake air is consumed in combustion of fuel, resulting in lack of oxygen to burn matter trapped on the DPF.

The present invention has been made to solve problems as mentioned above. The primary object of the present invention is to provide a method and system for regenerating a particulate filter, capable of efficiently supplying oxygen to the particulate filter and efficiently raising the temperature of exhaust gas with simple configuration.

### Means for solving the Problems

The present invention provides a method of regenerating a particulate filter provided in an exhaust line of an internal combustion engine equipped with a turbocharger, by burning matter trapped on the particulate filter by raising the temperature of exhaust gas at times that the particulate filter requires regeneration, comprising: a first step of increasing the flow rate of compressed air without depending on the flow rate of exhaust gas flowing across a turbine of the turbocharger, and a second step of delivering part of the compressed air from a section of an intake line upstream of the internal combustion engine to a section of the exhaust line upstream of the particulate filter, bypassing the engine.

The method may further comprise a third step of performing regulation to reduce the energy loss that the exhaust gas suffers in the turbine. The third step may consist of opening a variable nozzle provided to make the turbocharger a variable displacement type, or opening a wastegate, for example.

The present invention further provides a system for regenerating a particulate filter provided in an exhaust line of an internal combustion engine equipped with a turbocharger, by burning matter trapped on the particulate filter by raising the temperature of exhaust gas at times that the particulate filter requires regeneration, comprising: an intake quantity regulation means capable of increasing the flow rate of compressed air without depending on the flow rate of exhaust gas flowing across a turbine of the turbocharger, a bypass line connecting a section of an intake line upstream of the internal combustion engine to a section of the exhaust line upstream of the particulate filter, a flow rate regulation valve regulating the flow rate in the bypass line, and a control means controlling the intake quantity regulation means and the flow rate regulation valve.

The intake quantity regulation means may consist of an electric motor connected to the turbocharger or an electric booster arranged upstream of the turbocharger, for example. It is desirable that the bypass line be connected to the exhaust line, immediately after the internal combustion engine or immediately before the particulate filter.

The turbocharger may include a turbine flow regulation means regulating the flow rate of exhaust gas entering the turbine, where the control means regulates the turbine flow regulation means to reduce the energy loss that the exhaust gas suffers in the turbine. The turbine flow regulation means may consist of a variable nozzle or a wastegate, for example, where the control means opens the variable nozzle or the wastegaste.

### EFFECT OF THE INVENTION

The method and system for regenerating a particulate filter according to the present invention can increase the amount of oxygen supplied to the particulate filter by increasing the flow rate of compressed air without depending on the flow rate of exhaust gas flowing across a turbine of a turbocharger, and delivering part of the compressed air to the particulate filter, bypassing the internal combustion engine, and thus, enables effective burning of matter trapped on the particulate filter. Particularly, if the compressed air bypassing the internal combustion engine is delivered to the exhaust line, immediately after the internal combustion engine, it can cause burning of unburned fuel, resulting in an increase in heat.

Further, regulation to reduce the energy loss that the exhaust gas suffers in the turbine, or in other words, regulation to reduce heat loss by reducing the work done by the exhaust gas in the turbine leads to an efficient rise in exhaust gas temperature.

### BRIEF DESCRIPTION OF THE DRAWINGS

FIG. 1 is a diagram schematically showing a configuration of a first embodiment of particulate filter regeneration system according to the present invention,
FIG. 2 is a diagram schematically showing a configuration of a second embodiment of particulate filter regeneration system according to the present invention,
FIG. 3 is a diagram schematically showing a configuration of a third embodiment of particulate filter regeneration system according to the present invention,
FIG. 4 is a diagram showing a turbine flow regulation means in the third embodiment on an enlarged scale,
FIG. 5 is a diagram schematically showing a configuration of a fourth embodiment of particulate filter regeneration system according to the present invention,
FIG. 6 is a diagram showing a turbine flow regulation means in the fourth embodiment on an enlarged scale,
FIG. 7 is a diagram schematically showing a configuration of a fifth embodiment of particulate filter regeneration system according to the present invention, and FIG. 8 is a diagram schematically showing a configuration of a sixth embodiment of particulate filter regeneration system according to the present invention.

### BEST MODE OF CARRYING OUT THE INVENTION

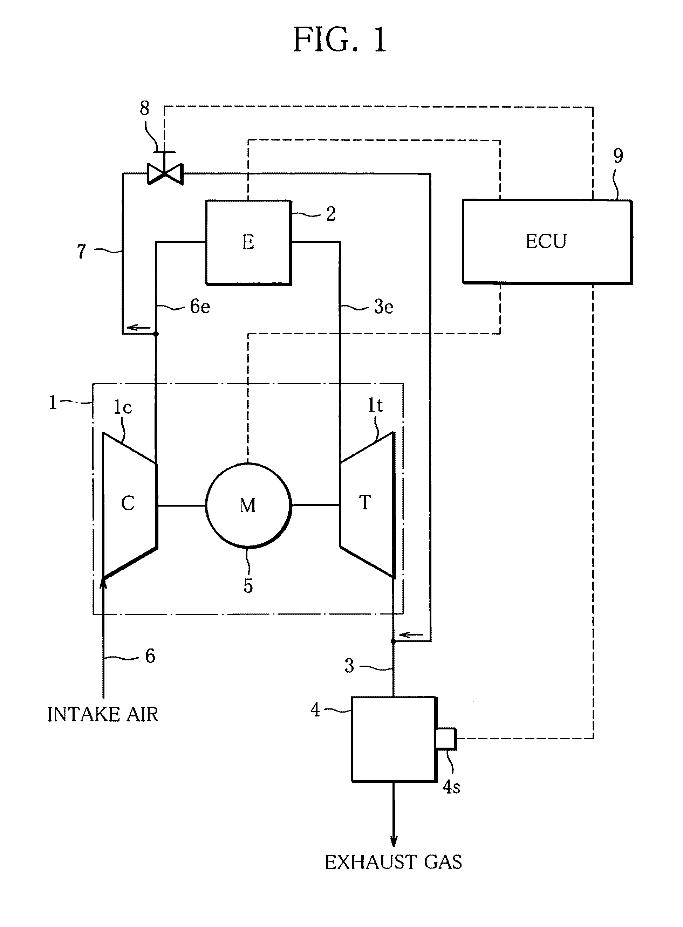

Referring to FIGS. 1 to 8, embodiments of the present invention will be described. FIG. 1 is a diagram schematically showing a configuration of a first embodiment of particulate filter regeneration system according to the present invention.

The particulate filter regeneration system according to the present invention shown in FIG. 1 is designed to regenerate a particulate filter 4 arranged in an exhaust line 3 of an engine (internal combustion engine) 2 equipped with a turbocharger 1 by raising the temperature of exhaust gas, thereby burning matter trapped on the particulate filter 4 at times that the particulate filter 4 requires regeneration, and comprises an electric motor 5 functioning as an intake quantity regulation means capable of increasing the flow rate of compressed air without depending on the flow rate of exhaust gas flowing across a turbine 1t of the turbocharger 1, a bypass line 7 connecting a section of an intake line upstream of the engine 2 (an engine intake line 6e) to a section of the exhaust line 3 upstream of the particulate filter 4, a flow rate regulation valve 8 regulating the flow rate in the bypass line 7, and a control means 9 controlling the electric motor 5 and the flow rate regulation valve 8.

The turbocharger 1 is a device which drives a compressor 1c by a turbine 1t extracting energy from exhaust gas, thereby delivering compressed air to the engine 2 to increase power output of the engine. The compressor 1c has an inlet connected to the intake line 6 conveying air taken in from the outside, and an outlet connected to the engine intake line 6e delivering compressed air to the engine 2. The engine intake line 6e may include an intercooler to cool the compressed air. The turbine 1t has an inlet connected to an engine exhaust line 3e conveying exhaust gas of the engine 2, and an outlet connected to an exhaust line 3 discharging the exhaust gas to the outside. The engine intake line 6e constitutes part of the intake line 6 and the engine exhaust line 3e constitutes part of the exhaust line 3.

The turbocharger 1 shown in FIG. 1 includes an electric motor 5 forcibly rotating the turbine 1t and the compressor 1c so that the turbocharger 1 can operate without depending on the flow rate of exhaust gas flowing across the turbine 1t. Thus, forcible driving of the turbocharger 1 by the electric motor 5 can increase the flow rate of compressed air from the compressor 1c. Further, while the turbine 1t is being forcibly driven by the electric motor 5, exhaust gas flows across the turbine 1t without doing work, which minimizes loss of heat (exhaust gas energy).

The engine 2 is, for example a diesel engine or a gasoline engine mounted on an automobile or the like. The respective amounts of compressed air and fuel supplied to the engine 2 are controlled depending on operating conditions. Such control is performed by an electronic control unit (ECU) installed on the automobile. The engine 2 is controlled by controlling air-fuel ratio (mass ratio between air and fuel). For example, in normal operation, by driving the compressor 1c by the turbine 1t driven by exhaust gas, compressed air is supplied to the engine 2, and fuel is supplied to the engine 2 to achieve demanded power output of the engine 2. The air-fuel ratio is sometimes controlled to a level close to a stoichiometric air-fuel ratio (ratio resulting in a reaction between fuel and oxygen in the air with no fuel or oxygen left over) in order to effectively activate exhaust gas clean-up catalysts, and sometimes controlled to a level higher than the stoichiometric air-fuel ratio (economic air-fuel ratio) in order to improve fuel economy and reduce toxic substances in the exhaust gas. The electronic control unit (ECU) also functions as a control means 9 in the regeneration system according to the present invention.

The particulate filter 4 is, for example a DPF for use on a diesel engine automobile. The particulate filter 4 is made of ceramic or the like and traps particulate matter (PM) in the exhaust gas. Since the PM accumulated to a certain level clogs the particulate filter 4, the particulate filter 4 requires to be regenerated by burning the PM by raising the temperature of exhaust gas. Active raising of the exhaust gas temperature is possible by increasing fuel supply to the engine 2. On the other hand, although the burning of PM requires oxygen, oxygen in the air is consumed in combustion in the engine 2, so that the exhaust gas has a lower oxygen concentration, compared with the air, resulting in low efficiency of burning the PM. Thus, in the present invention, the bypass line 7 is provided to be able to supply fresh air to the particulate filter 4. As shown in FIG. 1, a pressure sensor 4s is fitted to the particulate filter 4 to detect pressure (back pressure) downstream of the particulate filter 4 to determine whether or not the particulate filter requires regeneration.

The bypass line 7 connects the engine intake line 6e to the exhaust line 3 to extract part of the air compressed by the compressor 1c from the intake line, before the engine 2, and deliver it to the exhaust line, before the particulate filter 4, bypassing the engine 2. Thus, the bypass line can supply fresh air, i.e., air not experiencing combustion in the engine 2 to the particulate filter 4. The amount of air bypassing the engine is controlled by the flow rate regulation valve 8. The flow rate regulation valve 8 may be arranged midway in the bypass line 7 as shown in the drawing, or at a point at which the bypass line branches off the engine intake line 6e, or at a point at which the bypass line meets the exhaust line 3. Sometimes an exhaust gas clean-up catalytic converter removing toxic substances (mainly, hydrocarbons, carbon monoxide and nitrogen oxides) from the exhaust gas is arranged in the exhaust line 3. Such exhaust gas clean-up catalytic converter is mostly arranged upstream of the particulate filter 4. The bypass line 7 may meet the exhaust line 3 either upstream or downstream of the exhaust gas clean-up catalytic converter.

The control means 9 is actually the aforementioned electric control unit (ECU). The control means 9 is electrically connected to a fuel supply means of the engine 2 to supply fuel to the engine 2 so that the engine 2 has a desired air-fuel ratio. The control means 9 is also electrically connected to the electric motor 5 to control the electric motor, determining whether to drive or stop it and the revolving speed thereof. The control means 9 is further electrically connected to the flow rate regulation valve 8 to control the flow rate regulation valve 8, determining whether to open or close it and how much to open it. The control means 9 is furthermore electrically connected to the pressure sensor 4s fitted to the particulate filter 4 to monitor the back pressure exerted on the particulate filter 4 to determine when to start and when to terminate the regeneration of the particulate filter 4.

Next, the function of the above-described particulate filter regeneration system, or in other words, the particulate filter regeneration method according to the present invention will be described. The method of regenerating the particulate filter 4 according to the present invention is designed to regenerate the particulate filter 4 arranged in the exhaust line 3 of the engine 2 equipped with the turbocharger 1, by burning matter trapped on the particulate filter 4 by raising the temperature of exhaust gas at times that the particulate filter 4 requires regeneration, and comprises a first step of increasing the flow rate of compressed air without depending on the flow rate of exhaust gas flowing across the turbine 1t of the turbocharger 1, and a second step of delivering part of the compressed air from a section of the intake line upstream of the engine 2 (engine intake line 6e) to a section of the exhaust line 3 upstream of the particulate filter 4, bypassing the engine 2.

The control means 9 determines whether to start regeneration of the particulate filter 4 on the basis of the output of the pressure sensor 4s fitted to the particulate filter 4. Specifically, the control means 9 determines whether to start regeneration of the particulate filter 4 by comparing the pressure (back pressure) downstream of the particulate filter 4 with a preset threshold. Whether to start regeneration of the particulate filter 4 may be determined on the basis of the pressure downstream of the particulate filter 4 detected by a pressure sensor 4s arranged downstream of the particulate filter 4 in the exhaust line 3, or on the basis of how long the particulate filter 4 has been used, if a pressure sensor 4s is not provided.

In the first step, the electric motor 5 is driven according to an instruction from the control means 8. This can increase the flow rate of compressed air without depending on the flow rate of exhaust gas flowing across the turbine 1t. The drive motor 5 is controlled to be able to supply compressed air in the amount providing oxygen required to burn the PM trapped on the particulate filter 4, in addition to the compressed air required for combustion in the engine. If the temperature of exhaust gas is not high enough to regenerate the particulate filter 4, the heat contained in the exhaust gas can be increased by switching the target for air-fuel ratio control from an economic air-fuel ratio to a stoichiometric or a fuel-rich air-fuel ratio, or by increasing the amount of air taken into the engine 2, thereby raising the upper limit of fuel supply.

In the second step, the flow rate regulation valve 8 is opened according to an instruction from the control means 9. This allows part of compressed air to be delivered from the engine intake line 6e to the section of the exhaust line 3 upstream of the particulate filter 4, bypassing the engine. The degree to which the flow rate regulation valve 8 is opened is controlled to be able to extract compressed air in the amount providing oxygen required to burn the PM trapped on the particulate filter 4. Incidentally, since the pressure in the engine intake line 6a is normally higher than the pressure in the exhaust line 3, there is no need to provide a suction device such as a pump. However, if desired, a suction device such as a pump may be arranged in the bypass line 7 to actively force the compressed air to the exhaust line.

When the pressure (back pressure) downstream of the particulate filter 4 decreases below a preset criterion, it is determined that the regeneration of the particulate filter 4 should be terminated. The control means 9 determines to terminate the regeneration on the basis of the output of the pressure sensor 4s. Alternatively, the control means may determine to terminate the regeneration after a predetermined time of regeneration of the particulate filter 4, where the regeneration time is empirically or statistically determined, and the control means 9 measures elapsed time after the start of regeneration.

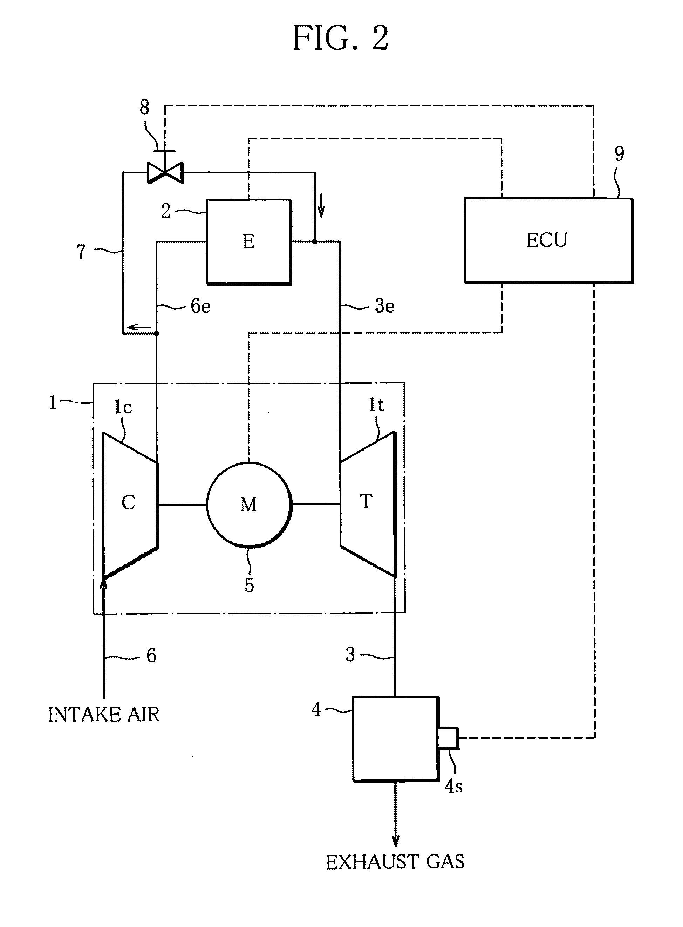

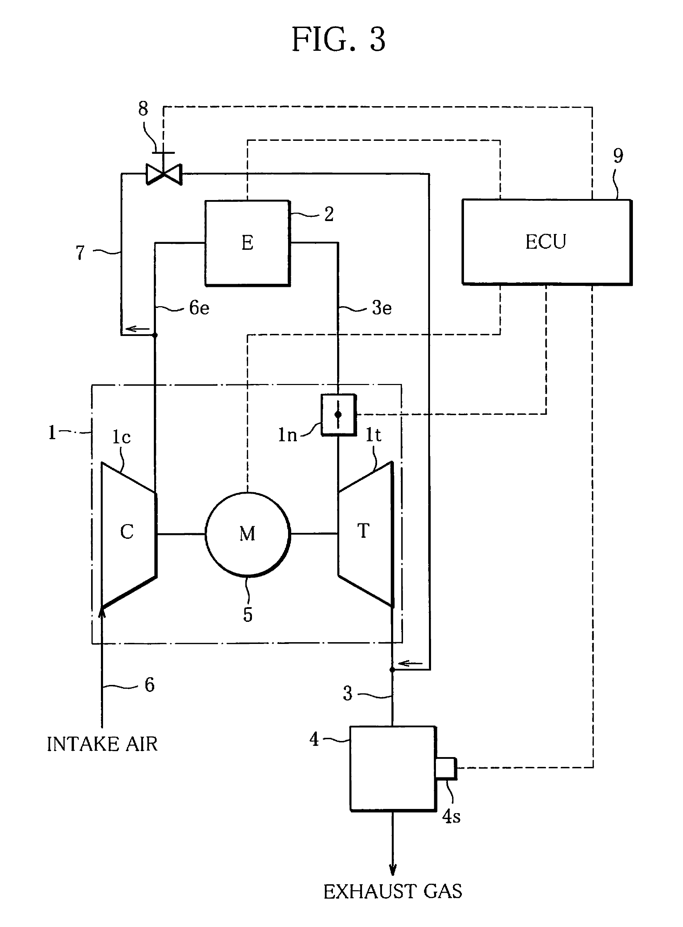

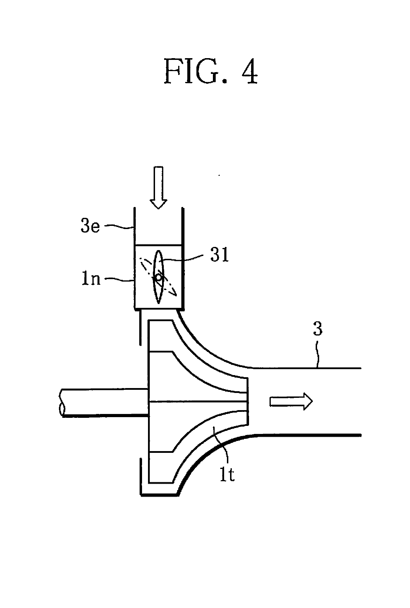

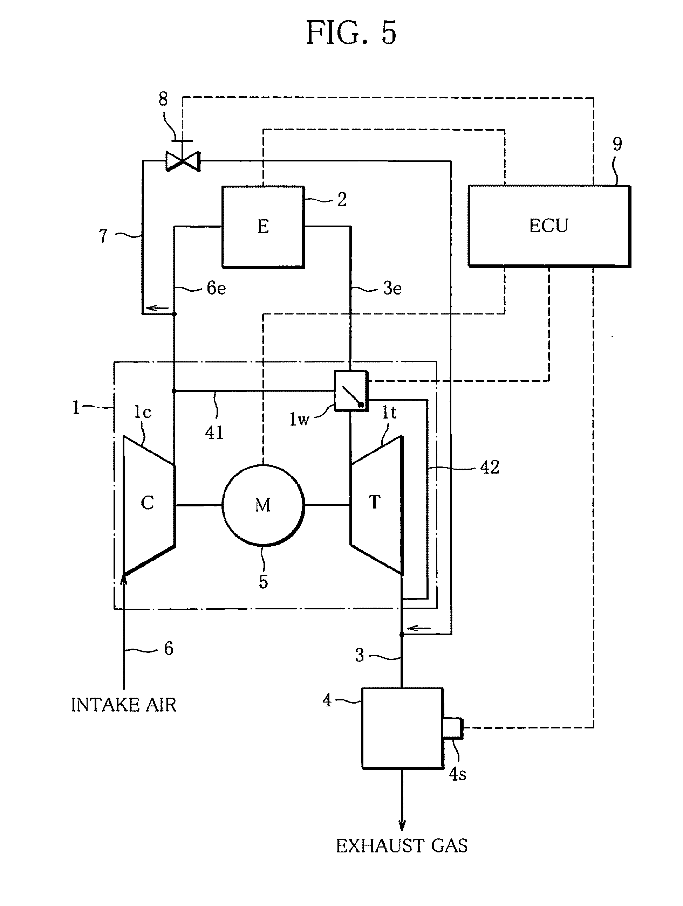

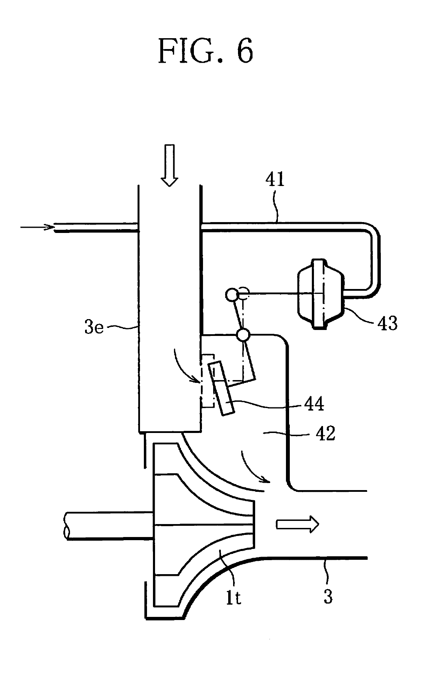

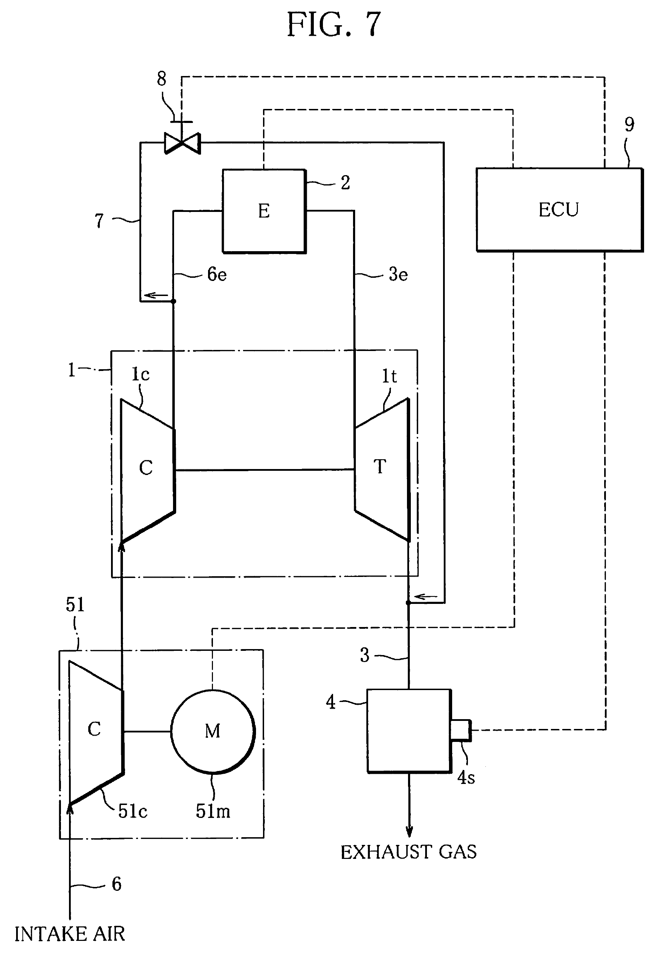

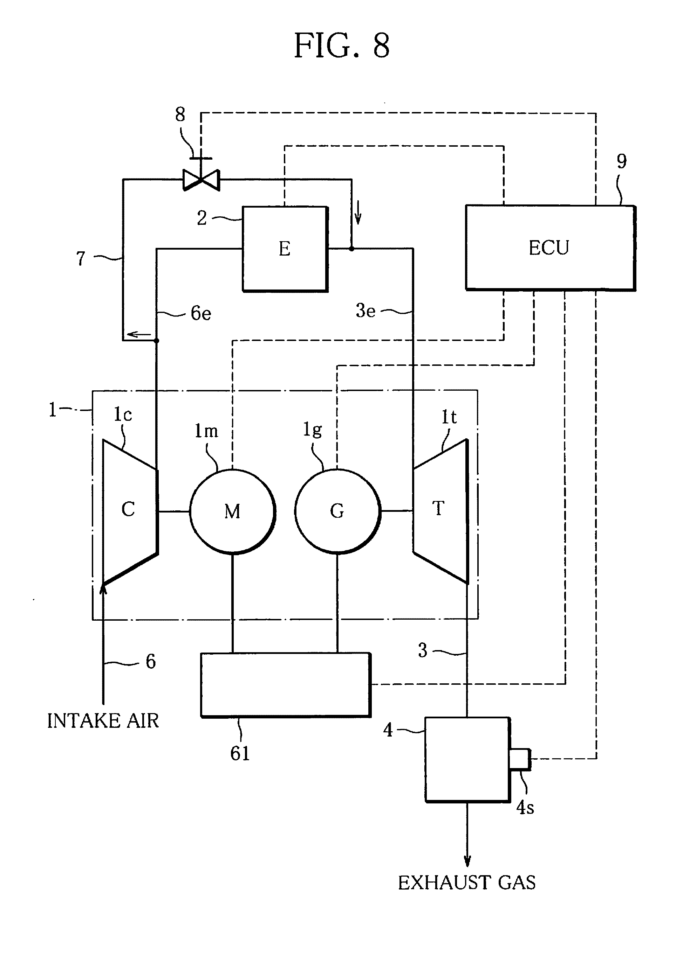

Next, other embodiments of particulate filter 4 regeneration system according to the present invention will be described. FIG. 2 is a diagram schematically showing a configuration of a second embodiment of particulate filter regeneration system according to the present invention, FIG. 3 a diagram schematically showing a configuration of a third embodiment of particulate filter regeneration system according to the present invention, FIG. 4 a diagram showing a turbine flow regulation means in the third embodiment on an enlarged scale, FIG. 5 a diagram schematically showing a configuration of a fourth embodiment of particulate filter regeneration system according to the present invention, FIG. 6 a diagram showing a turbine flow regulation means in the fourth embodiment on an enlarged scale, FIG. 7 a diagram schematically showing a configuration of a fifth embodiment of particulate filter regeneration system according to the present invention, and FIG. 8 a diagram schematically showing a configuration of a sixth embodiment of particulate filter regeneration system according to the present invention. In each drawing, the same components as those of the first embodiment are assigned the same reference characters to omit repetitive description.

In the second embodiment of the present invention shown in FIG. 2, the outlet of the bypass line 7 is connected to the engine exhaust line 3e. It is desirable that the outlet of the bypass line 7 be connected to the engine exhaust line 3e, immediately after the engine 2. Connecting the bypass line 7 at this position enables burning of unburned fuel in the engine exhaust line 3e, resulting in an increase in heat contained in exhaust gas (exhaust gas energy). In this case, part of the compressed air bypassing the engine is consumed to burn unburned fuel. Thus, the degree to which the flow rate regulation valve 8 is opened is controlled taking account of such consumption.

In the third embodiment of the present invention shown in FIG. 3, the turbocharger 1 has a turbine flow regulation means regulating the flow rate of exhaust gas entering the turbine 1t, and the control means 9 regulates the turbine flow regulation means to reduce the energy loss that the exhaust gas suffers in the turbine 1t. In the illustrated example, the turbine flow regulation means consists of a variable nozzle In which makes the turbocharger 1 a so-called variable displacement turbocharger. The variable displacement turbocharger can control the flow velocity or flow rate of exhaust gas entering the turbine 1t by opening and closing the variable nozzle In, thereby controlling the flow rate of compressed air delivered to the engine 2. Such variable displacement supercharge 1 can, by itself, cover a wide range of engine 2 operation and provide high supercharging efficiency. The term "variable nozzle 1" is used to encompass all the variable mechanisms which can make the turbocharger 1 a variable displacement type, among which there are mechanisms using flaps or vanes, for example. Incidentally, in FIG. 3, the variable nozzle In is in maximum open position.

As shown in FIG. 4, the variable nozzle In is inserted between the engine exhaust line 3e and the turbine 1t, and located immediately before the inlet of the turbine 1t. The variable nozzle In has a vane 31 rotatably arranged inside a turbine housing. In order to decrease the flow rate and increase the flow velocity of exhaust gas entering the turbine 1t, the vane 31 is closed, as indicated in chain line in FIG. 4. Conversely, in order to increase the flow rate and decrease the flow velocity of exhaust gas entering the turbine 1t, the vane 31 is opened, as indicated in solid line in FIG. 4. When the vane 31 is opened, the resistance that the variable nozzle In exerts on the exhaust gas reduces, so that the energy loss which the exhaust gas suffers in the turbine 1t reduces. Further, the turbine 1b is allowed to be driven by the electric motor 5 at an increased revolving speed suited for the increased flow rate of exhaust gas flowing across the turbine 1t, resulting in an increase in the flow rate of air drawn into the compressor 1c. This enables a sufficient amount of compressed air to be delivered bypassing the engine. Incidentally, according to the actual arrangement, the vane 31 of the variable nozzle In should show its back or front face in FIG. 4, but for convenience of explanation, the vane 31 is indicated in a position turned to show its airfoil shape.

In the fourth embodiment of the present invention shown in FIG. 5, the turbocharger 1 has a turbine flow regulation means regulating the flow rate of exhaust gas entering the turbine 1t, and the control means 9 regulates the turbine flow regulation means to reduce the energy loss that the exhaust gas suffers in the turbine 1t. In the illustrated example, the turbine flow regulation means consists of a wastegate 1w. The wastegate 1w is connected to a branch line 41, which is connected to the engine intake line 6e, and a bypass line 42, which is connected to the exhaust line 3, downstream of the turbine 1t. The wastegate 1w is a device which is, normally, when the pressure of the compressed air in the engine intake line 6e becomes too high, opened to allow part of exhaust gas to bypass the turbine 1t, thereby reducing the flow rate of air drawn into the compressor 1c, thereby reducing the pressure of compressed air. Thus, opening the wastegate 1w, thereby allowing part of exhaust gas to bypass the turbine 1t means reducing the work done by exhaust gas in the turbine. If, in this state, the turbine 1t is forcibly driven by the electric motor 5 at an optional revolving speed, such driving of the turbine 1t does not result in any loss of energy of exhaust gas. The wastegate 1w is electrically connected to the electric control unit (ECU) functioning as the control means 9 so that the ECU can control the opening and closing of the wastegate 1w.

As shown in FIG. 6, the wastegate 1w includes an actuator 32 connected to the branch line 41 and a valve plate 44 opened and closed by the actuator 32. While the pressure of compressed air in the engine intake line 6e to which the branch line 41 is connected is low, the actuator 43 is pressing the valve plate 44 to the engine exhaust line 3e, as indicated in chain line in FIG. 6, so that the bypass line 42 is closed. When the pressure of compressed air in the engine intake line 6e exceeds a predetermined level, the actuator 43 draws the valve plate 44 away from the engine exhaust line 3e, as indicated in solid line in FIG. 6, so that the bypass line 22 is opened. This allows part of exhaust gas to flow from the engine exhaust line 3e to a downstream section of the exhaust line 3, bypassing the turbine 1t, thereby reducing the flow rate of exhaust gas flowing across the turbine 1t, thus, reducing the energy loss which the exhaust gas suffers in the turbine 1t. Thus, if the turbine 1t is driven by the electric motor 5 at an optional revolving speed with the wastegate 1w opened, it does not significantly affect the energy loss that the exhaust gas suffers.

In the fifth embodiment of the present invention shown in FIG. 7, an electric booster 51 is arranged upstream of the turbocharger 1, as an intake quantity regulation means. Such fifth embodiment does not require a drive motor 5 as shown in FIG. 1, so that the turbocharger 1 is a normal type not including a drive motor 5, as seen from FIG. 7. Naturally, the turbocharger 1 may be a type redundantly provided with a drive electric motor 5. The electric booster 51 includes a compressor 51c arranged in the intake line 6 and an electric motor 51m connected to the compressor 51c. The electric motor 51m is electrically connected to the control means 9 so that the control means can control the operation of the electric motor 51m determining whether to drive or stop it and the revolving speed thereof. Such electric booster 51 can increase the flow rate of compressed air without depending on the flow rate of exhaust gas flowing across the turbine 1t. Further, compressed air delivered by the electric booster 51 being driven can forcibly drive the compressor 1c of the turbocharger 1, and therefore forcibly drive also the turbine 1t linked with the compressor 1c. This results in a reduction in the work done by the exhaust gas in the turbine 1t, and thus a reduction in heat loss.

In the sixth embodiment of the present invention shown in FIG. 8, the turbine 1t and the compressor 1c of the turbocharger 1 are separated, where the turbine 1t is connected to an electric generator 1g and the compressor 1c is connected to an electric motor 1m. The generator 1g and the electric motor 1m are connected to a battery 61. Electricity generated by the generator 1g is stored in the battery 61, and the battery 61 supplies electricity to the electric motor 1m. In this configuration, the flow rate of compressed air can be increased without depending on the flow rate of exhaust gas flowing across the turbine 1t, by driving the compressor 1c by the electric motor 1m. When a rise in exhaust gas temperature is desired, the generator 1g should be placed in a no-load state to minimize the work done by the exhaust gas in the turbine 1t. The sixth embodiment with the turbine 1t and the compressor 1c separated has increased freedom of arrangement of the system components, and thus, improved versatility.

The present invention is not limited to the above-described embodiments. It goes without saying that various modifications can be made without departing from the spirit and scope of the present invention. For example, in the fourth and fifth embodiments, the outlet of the bypass line 7 may be connected to the exhaust line at the position taken in the second embodiment, and in the sixth embodiment, the outlet of the bypass line 7 may be connected to the exhaust line at the position taken in the first embodiment. Various features in the embodiments may be combined appropriately.

### EXPLANATION OF REFERENCE CHARACTERS

1 Turbocharger
1t Turbine
1c Compressor
1m Electric motor
In Variable nozzle
1w Wastegate
1g Electric generator
2 Engine
3 Exhaust line
3e Engine exhaust line
4 Particulate filter
4s Pressure sensor
5 Electric motor
6 Intake line
6e Engine intake line
7 Bypass line
8 Flow rate regulation valve
9 Control means
31 Vane
41 Branch line
42 Bypass line
43 Actuator
44 Valve plate
51 Electric booster
51c Compressor
51m Electric motor
61 Battery

## Claims

1. A method of regenerating a particulate filter provided in an exhaust line of an internal combustion engine equipped with a turbocharger, by burning matter trapped on the particulate filter by raising the temperature of exhaust gas at times that the particulate filter requires regeneration, comprising:
a first step of increasing the flow rate of compressed air without depending on the flow rate of exhaust gas flowing across a turbine of the turbocharger, and a second step of delivering part of the compressed air from a section of an intake line upstream of the internal combustion engine to a section of the exhaust line upstream of the particulate filter, bypassing the engine.

2. The method of regenerating the particulate filter according to claim 1, further comprising
a third step of performing regulation to reduce the energy loss that the exhaust gas suffers in the turbine.

3. The method of regenerating the particulate filter according to claim 2, **characterized in that** the third step consists of opening a variable nozzle provided to make the turbocharger a variable displacement type, or opening a wastegate.

4. A system for regenerating a particulate filter provided in an exhaust line of an internal combustion engine equipped with a turbocharger, by burning matter trapped on the particulate filter by raising the temperature of exhaust gas at times that the particulate filter requires regeneration, comprising:
an intake quantity regulation means capable of increasing the flow rate of compressed air without depending on the flow rate of exhaust gas flowing across a turbine of the turbocharger, a bypass line connecting a section of an intake line upstream of the internal combustion engine to a section of the exhaust line upstream of the particulate filter, a flow rate regulation valve regulating the flow rate in the bypass line, and a control means controlling the intake quantity regulation means and the flow rate regulation valve.

5. The system for regenerating the particulate filter according to claim 4, **characterized in that** the intake quantity regulation means consists of an electric motor connected to the turbocharger or an electric booster arranged upstream of the turbocharger.

6. The system for regenerating the particulate filter according to claim 4, **characterized in that** the bypass line is connected to the exhaust line, immediately after the internal combustion engine or immediately before the particulate filter.

7. The system for regenerating the particulate filter according to claim 4, **characterized in that** the turbocharger includes a turbine flow regulation means regulating the flow rate of exhaust gas entering the turbine, and the control means regulates the turbine flow regulation means to reduce the energy loss that the exhaust gas suffers in the turbine.

8. The system for regenerating the particulate filter according to claim 7, **characterized in that** the turbine flow regulation means consists of a variable nozzle or a wastegate, and the control means opens the variable nozzle or the wastegate.
